# EUROPEAN PATENT APPLICATION

(11) **EP 2 716 534 A1**
(43) Date of publication of application: **09.04.2014**
(21) Application number: 12187330.1
(22) Date of filing: 05.10.2012
(51) Int. Cl.: B62K 19/30, B62K 25/02

(54) **A dropout system for a rear frame assembly of a bicycle**

(71) Applicant: Fisher Outdoor Leisure Limited, St Albans, Hertfordshire AL1 5UG (GB)
(72) Inventor: Hawyes, Martin, ST. ALBANS, Hertfordshire AL1 5UG (GB); Davies, Callum, ST. ALBANS, Hertfordshire AL1 5UG (GB)
(74) Representative: Fluit, Jeroen

(57) **Abstract**

A dropout system (1) for a rear frame assembly (9) of a bicycle is disclosed, the dropout system (1) comprising: a pair of dropout housings (11), which can be fixed at ends of the rear of the frame of the bicycle; a pair of replaceable vertical dropout inserts (21) with substantially vertical slots (213), which can be combined with the dropout housings (11) while the dropout system (1) is to be used in a vertical configuration; and a pair of replaceable horizontal dropout inserts (31) with substantially horizontal slots (313), which can be combined with the dropout housings (11) while the dropout system (1) is to be used in a horizontal configuration.

## Description

### Technical Field

The present invention generally relates to a dropout system for a rear frame assembly of a bicycle. More specifically, the present invention relates to a dropout system which can be used for a bicycle with a rear derailleur gear system or a single speed, hub geared or fixed-gear bicycle.

### Background of Invention

A bicycle with a rear derailleur and one with a fixed-gear, single speed, or hub geared system (i.e., without rear derailleur) are two different types of bicycles. The bicycle with a rear derailleur may use a bicycle frame with dropouts of the rear frame assembly that may have substantially vertical slots for receiving the axle of the rear wheel of the bicycle. Further, the dropouts of the rear fork can be used for hanging the rear derailleur on. The fixed-gear, singlespeed or hub geared bicycle may use a bicycle frame with dropouts of the rear fork that have substantially horizontal slots for receiving the axle of the rear wheel of the bicycle. Therefore, two different bicycle frames are required for these two different types of bicycles. In other words, if a rider would like to have these two different types of bicycles, he/she should have two different bicycle frames. The rider cannot have a single bicycle frame which can be used for the bicycle with the rear derailleur and the fixed-gear, singlespeed or hub geared option bicycle simultaneously.

In view of the above, there may exist a need for an improved dropout system for a bicycle frame. The present invention may address this need as well as other needs, which will become apparent to the persons skilled in the art from the disclosure of the present invention.

### Summary of the Invention

One objective of the present invention is to provide a dropout system for a rear fork which can be used in a vertical configuration and in a horizontal configuration such that a single bicycle frame with the dropout system can be used for a bicycle with a rear derailleur and a fixed-gear, single speed or hub geared bicycle.

Another objective of the present invention is to provide a dropout system of a rear fork which can be easily changed from a vertical configuration into a horizontal configuration.

Another objective of the present invention is to provide a dropout system of a rear fork which can be used for hanging a rear derailleur while in a vertical configuration.

Another objective of the present invention is to provide a dropout system of a rear frame assembly which has an adjusting screw for adjusting the tension of the chain while in a horizontal configuration.

To achieve the above objectives, the present invention provides a dropout system for a rear frame assembly of a bicycle, comprising: a pair of dropout housings, constructed for fixation at ends of the rear of the frame of the bicycle; a pair of replaceable vertical dropout inserts with substantially vertical slots, which can be combined with the dropout housings while the dropout system is to be used in a vertical configuration; and a pair of replaceable horizontal dropout inserts with substantially horizontal slots, which can be combined with the dropout housings while the dropout system is to be used in a horizontal configuration.

### Brief Description of the Drawings

Fig. 1A is an exploded view illustrating the dropout system in accordance with a preferred embodiment of the present invention, in a vertical configuration;
Fig. 1B shows the dropout system in accordance with a preferred embodiment of the present invention, in a vertical configuration;
Figs. 1C and 1D show the usage of the dropout system in a vertical configuration;
Fig. 1E shows the state of use of the dropout system in a vertical configuration;
Fig. 2A is an exploded view illustrating the dropout system in accordance with a preferred embodiment of the present invention, in a horizontal configuration;
Fig. 2B shows the dropout system in accordance with a preferred embodiment of the present invention, in a horizontal configuration;
Figs. 2C and 2D show the usage of the dropout system in a horizontal configuration;
Fig. 2E shows the state of use of the dropout system in a horizontal configuration; and
Fig. 3 shows another embodiment of the present invention of the dropout system.

### Detailed Description of the Preferred Embodiment

The preferred embodiment of the present invention is illustrated below with reference to the drawings, and the reference numerals are shown in the figures to indicate the corresponding elements.

The subject invention is related to a dropout system for the rear frame assembly of a bicycle which can be used for a bicycle with a rear derailleur or a fixed-gear, single speed or hub geared bicycle.

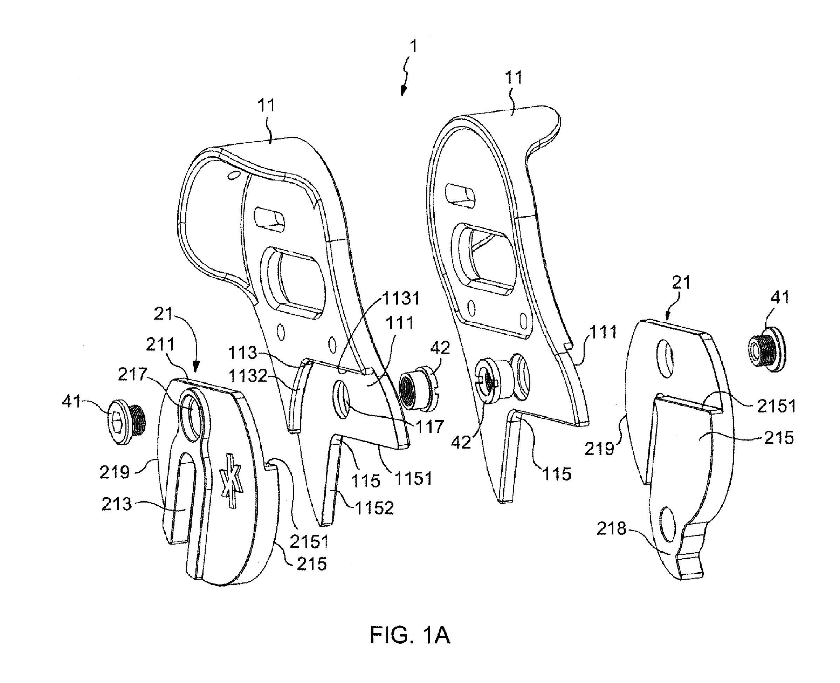

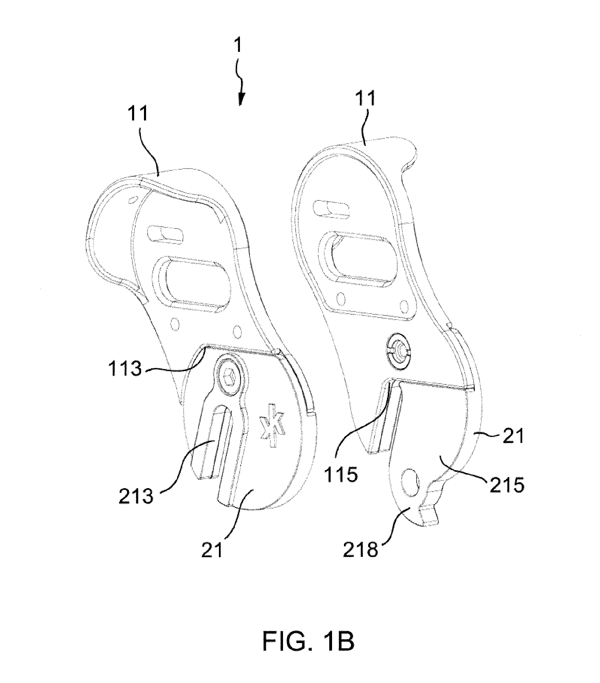

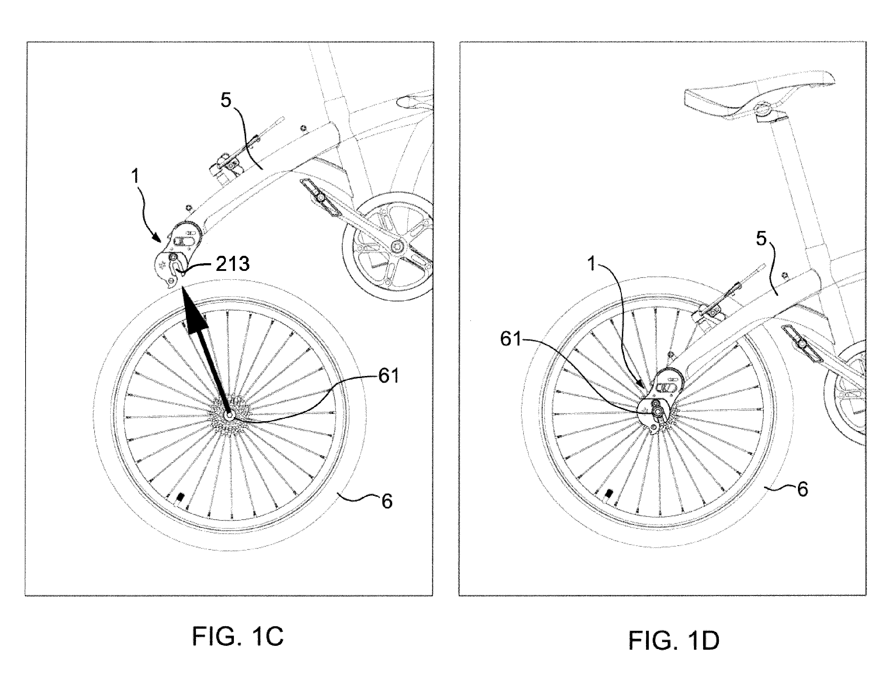

Figs. 1A-1D show the dropout system according to an embodiment of the present invention in a vertical configuration which can be used for a bicycle with a rear derailleur. As shown in Figs. 1A and 1B, the dropout system 1 has a pair of dropout housings 11, which are fixed at an end of the rear of the frame 9 of the bicycle frame (see Figs. 1C and 1D) respectively. Each of the dropout housings 11 has an arranged recess 111. Further, the arranged recess 111 comprises a substantially V-shaped close end 113 having a first edge 1131 and a second edge 1132, and comprises a substantially V-shaped indent 115 having a first edge 1151 and a second edge 1152. In addition, a through hole 117 is formed within the arranged recess 111.

The dropout system 1 further has a pair of replaceable vertical dropout inserts 21 which will be attached to the dropout housings 11 respectively, while the dropout system 1 is to be used for a bicycle with a rear derailleur (see Figs. 1C and 1D). Each of the replaceable vertical dropout inserts 21 has a first vertical dropout side 211 and a second vertical dropout side 219, and further has a substantially vertical slot 213 which can receive an axle 61 of the rear wheel 6 of the bicycle (see Figs. 1C and 1D). A vertical dropout protrusion 215 with a first vertical dropout edge 2151 is formed on the face of each replaceable vertical dropout insert 21. Moreover, a vertical dropout through hole 217 is formed on each replaceable vertical dropout insert 21 as well. In addition, in order to be used for a bicycle with a rear derailleur, one of the replaceable vertical dropout inserts 21 has a hanging portion 218 for hanging the derailleur.

When the dropout housing 11 and the replaceable vertical dropout insert 21 are combined with each other, the replaceable vertical dropout insert 21 is substantially attached to the arranged recess 111 of the dropout housing 11. Specifically, the first vertical dropout side 211 of the replaceable vertical dropout insert 21 abuts against the first edge 1131 of the close end 113 of the dropout housing 11, and a portion of the second vertical dropout side 219 of the replaceable vertical dropout insert 21 abuts against the second edge 1132 of the close end 113 of the dropout housing 11. Further, the first vertical dropout edge 2151 of the vertical dropout protrusion 215 of the replaceable vertical dropout insert 21 abuts against the first edge 1151 of the indent 115, Thus, the dropout housing 11 and the replaceable vertical dropout insert 21 can be engaged with each other. In addition, the through hole 117 of the dropout housing 11 corresponds to the vertical dropout through hole 217 of the replaceable vertical dropout insert 21, and a bolt assembly composed of a male bolt 41 and a female bolt 42 can be arranged through the through hole 117 of the dropout housing 11 and the vertical dropout through hole 217 of the replaceable vertical dropout insert 21 such that the dropout housing 11 and the replaceable vertical dropout insert 21 can be combined strongly.

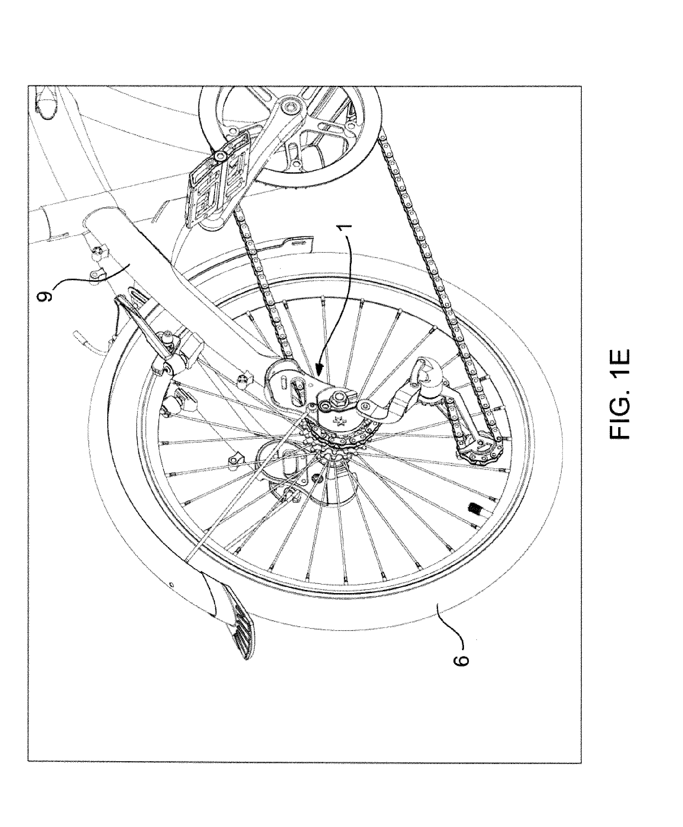

As shown in Figs. 1C and 1E, when the dropout housing 11 and the replaceable vertical dropout insert 21 are combined with each other, the dropout system 1 will have a substantially vertical slot 213 to receive the axle 61 of the rear wheel 6 of the bicycle. The rear wheel 6 can be arranged vertically at the rear of the frame of the bicycle and thus the rear frame assembly 9 with the dropout system 1 is suitable for a bicycle with a rear derailleur.

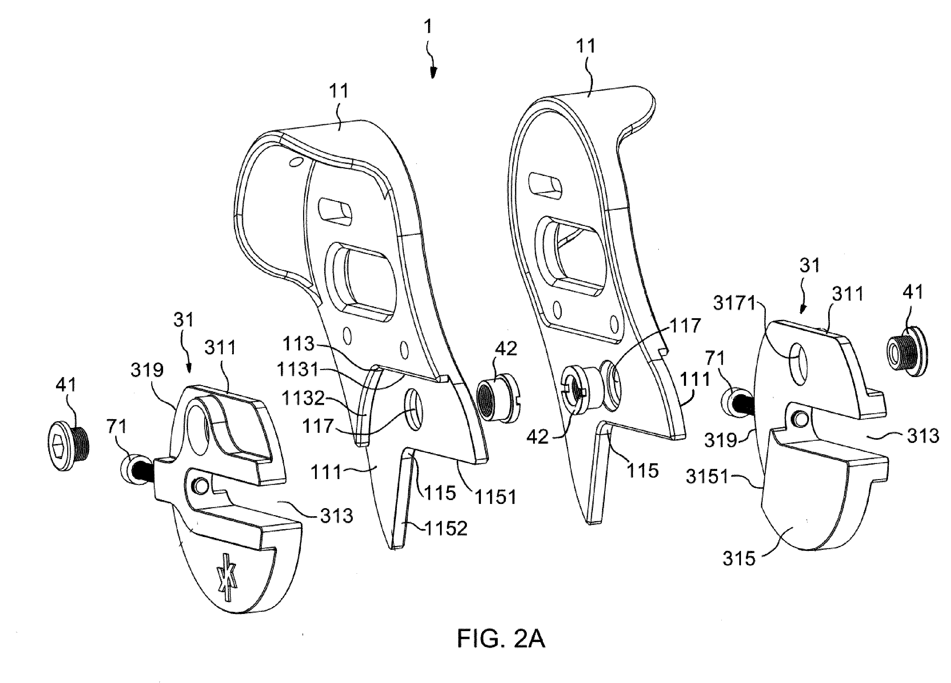

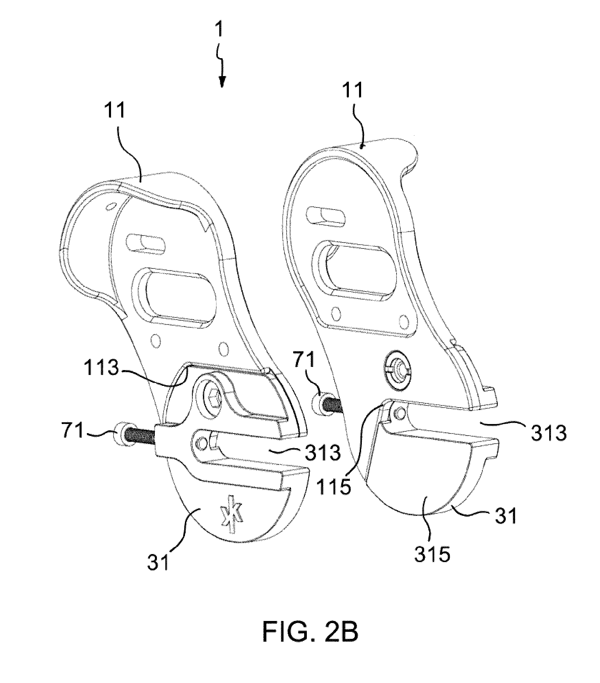

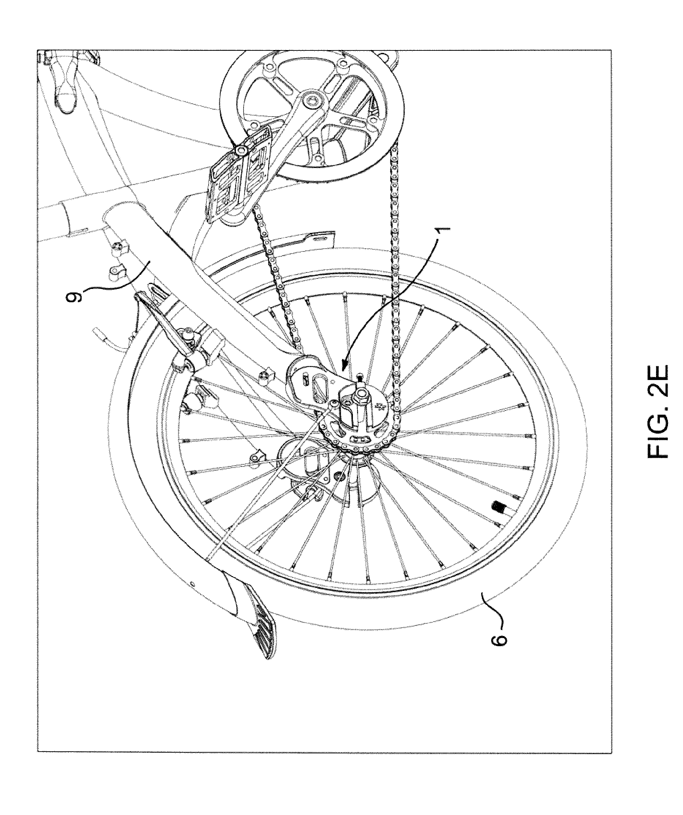

Figs. 2A-2E show the dropout system according to the present invention in a horizontal configuration which can be used for a fixed-gear bicycle, a single speed bicycle or a hub geared bicycle. As shown in Figs. 2A and 2B, in the current embodiment, the dropout system has a pair of dropout housings 11 the same as those disclosed in Figs. 1A-1D.

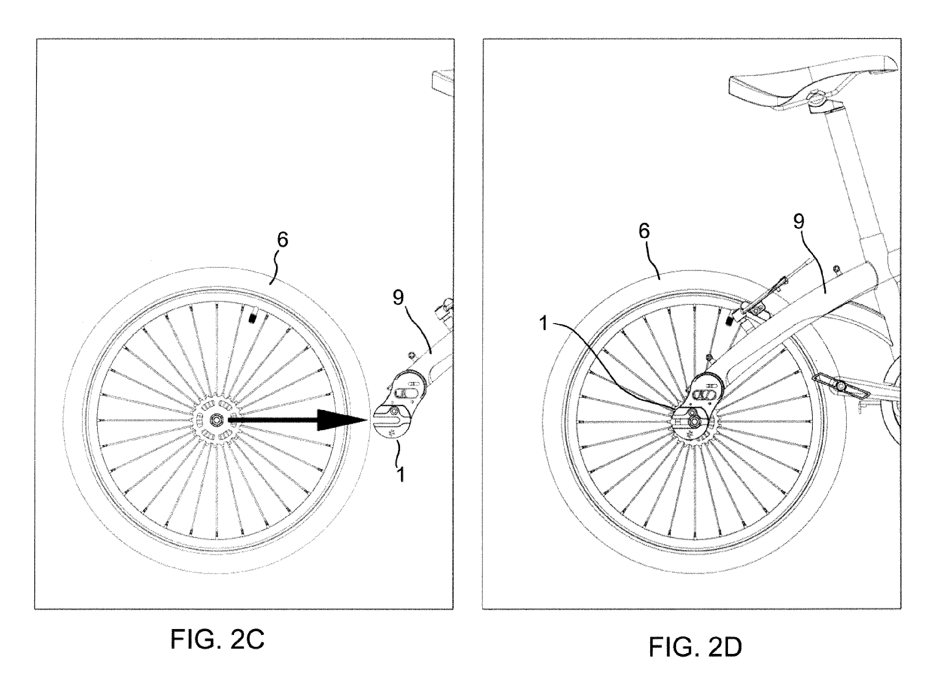

The dropout system 1 further has a pair of replaceable horizontal dropout inserts 31 which will be attached to the dropout housings 11 respectively when the dropout system 1 is to be used for a fixed-gear bicycle, a single speed bicycle or a hub geared bicycle (see Figs. 2C and 2D). Each of the replaceable horizontal dropout inserts 31 has a first horizontal dropout side 311 and a second horizontal dropout side 319, and further, each has a substantially horizontal slot 313 which can receive the axle 61 of the rear wheel 6 of the bicycle (see Figs. 2C and 2D). A horizontal dropout protrusion 315 with a first horizontal dropout edge 3151 is formed on the face of each replaceable horizontal dropout insert 31. Moreover, a horizontal dropout through hole 317 is formed at the replaceable horizontal dropout insert 31 as well. In addition, each replaceable horizontal dropout insert 31 has an adjusting screw 71 which extends from the horizontal dropout second side 319 of the horizontal dropout inserts 31 to the slot 313.

When the dropout housing 11 and the replaceable horizontal dropout insert 31 are combined with each other, the replaceable horizontal dropout insert 31 is substantially attached to the arranged recess 111 of the dropout housing 11. The first horizontal dropout side 311 of the replaceable horizontal dropout insert 31 abuts against the first edge 1131 of the close end 113 of the dropout housing 11, and a portion of the second horizontal dropout side 319 of the replaceable horizontal dropout insert 31 abuts against the second edge 1132 of the close end 113 of the dropout housing 11. Further, the first horizontal dropout edge 3151 of the horizontal dropout protrusion 315 of the replaceable horizontal dropout insert 31 abuts against the second edge 1152 of the indent 115, Thus, the dropout housing 11 and the replaceable horizontal dropout insert 21 can be engaged with each other. In addition, the through hole 117 of the dropout housing 11 corresponds to the horizontal dropout through hole 217 of the replaceable horizontal dropout insert 31, and a bolt assembly composed of a male bolt 41 and a female bolt 42 can be arranged through the through hole 117 of the dropout housing 11 and the horizontal dropout through hole 317 of the replaceable horizontal dropout insert 31 such that the dropout housing 11 and the replaceable horizontal dropout insert 31 can be combined strongly.

As shown in Figs. 2C-2E, when the dropout housing 11 and the replaceable horizontal dropout insert 31 are combined with each other, the dropout system 1 will have a substantially horizontal slot 313 to receive the axle 61 of the rear wheel 6 of the bicycle. The rear wheel can be arranged at the rear of the frame 9 of the bicycle horizontally and thus the rear frame assembly 9 with the dropout system 1 is suitable for a fixed-gear bicycle, a single speed bicycle and a hub geared bicycle.

On the basis of the above embodiments, when a rider would like to have a bicycle with a rear derailleur, he/she can arrange the replaceable vertical dropout inserts 21 at the dropout housings 11 respectively, such that the dropout system 1 can be in a vertical configuration and the rear wheel 6 can be arranged at the rear of the frame 9 vertically (see Figs. 1C-1E). Further, the rear derailleur can be hanged at the dropout system 1. Moreover, when the rider would like to have a fixed-gear bicycle, a single speed bicycle or a hub geared bicycle, he/she can replace the replaceable vertical dropout inserts 21 with the replaceable horizontal dropout inserts 31 such that the dropout system 1 can be in a horizontal configuration and the rear wheel 6 can be arranged at the rear of the frame assembly 9 horizontally (see Figs. 2C-2E). After arranging the rear wheel 6 at the dropout system 1 in a horizontal configuration, the rider can use the adjusting screw 71 to adjust the horizontal position of the axle of the rear wheel 6 so as to adjust the tension of the chain or belt drive system and thus keep the chain or belt drive system at a suitable tension.

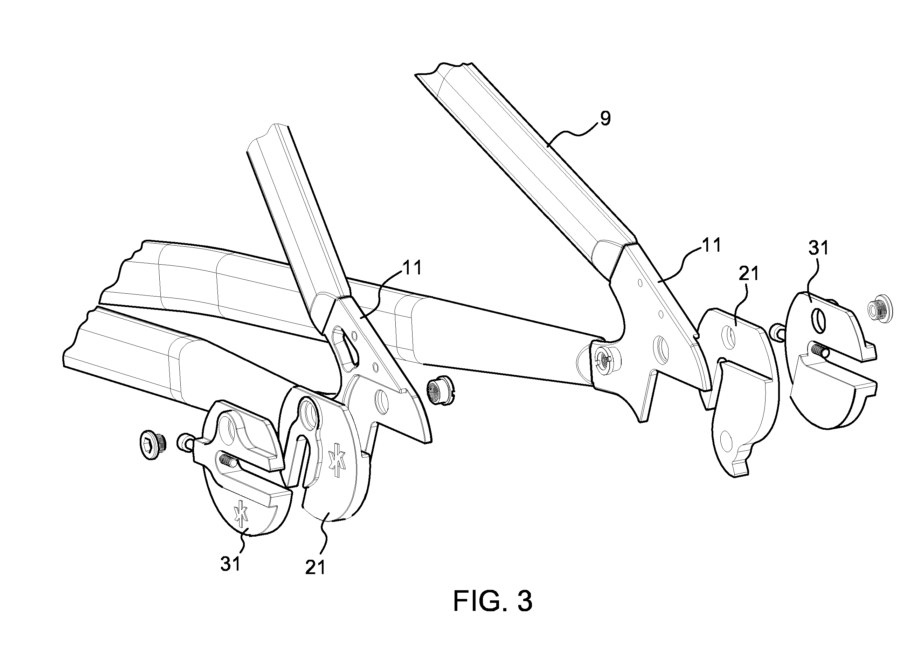

In addition, as shown in Fig. 3, the dropout housing 11 could be formed at the ends of the rear frame assembly 9 of the bicycle frame while manufacturing the bicycle frame, such that the dropout housing 11 is a part of the rear frame assembly including both a seat stay and chain stay arrangement 9 of the bicycle. Thus, the bicycle frame can be used for a bicycle with a rear derailleur and a fixed-gear, single speed or hub geared bicycle per se.

In view of the above, a single bicycle frame with the dropout system 1 could be used for a bicycle with a rear derailleur and a fixed gear, or single speed or hub geared system. It is unnecessary for the rider to prepare two different bicycle frames for these two different types of bicycle. Moreover, it is effortless for the rider to swap the replaceable vertical dropout inserts 21 with the replaceable horizontal dropout inserts 31 or vice versa.

The present invention should not be considered limited to the particular examples described above, but rather should be understood to cover all aspects of the invention as fairly set out in the attached claims. Various modifications, equivalent processes, as well as numerous structures to which the present invention may be applicable will be readily apparent to those skilled in the art upon review of the present specification to which the present invention is directed. For example, the modifications of the close end and the indent of the dropout housing. The claims are intended to cover such modifications and devices.

## Claims

1. A dropout system (1) for arrangement at a rear frame assembly (9) of a bicycle, comprising:
a pair of dropout housings (11), constructed for fixation at ends of the rear frame assembly (9), wherein each of the dropout housings (11) has an arranged recess (111) which has a close end (113) and an indent (115);
a pair of replaceable vertical dropout inserts (21) with substantially vertical slots (213) for receiving an axle of a rear wheel of the bicycle, wherein each of the replaceable vertical dropout inserts (21) has a vertical dropout protrusion (215), and wherein at least a portion of the replaceable vertical dropout insert (21) will abut against at least a portion of the close end (113) of the arranged recess (111) and at least a portion of the vertical dropout protrusion (215) of the replaceable vertical dropout insert (21) will abut against at least a portion of the indent (115) of the arranged recess (111) when the dropout housing (11) and the replaceable vertical dropout insert (21) are combined with each other, such that the dropout housing (11) and the replaceable vertical dropout insert (21) can be engaged with each other;
a pair of replaceable horizontal dropout inserts (31) with substantially horizontal slots (313) for receiving the axle of the rear wheel of the bicycle, wherein each of the replaceable horizontal dropout inserts (31) has a horizontal dropout protrusion (315), and wherein at least a portion of the replaceable horizontal dropout insert (31) will abut against at least a portion of the close end (113) of the arranged recess (111) and at least a portion of the horizontal dropout protrusion (315) of the replaceable horizontal dropout insert (31) will abut against at least a portion of the indent (115) of the arranged recess (111) when the dropout housing (11) and the replaceable horizontal dropout insert (31) are combined with each other, such that the dropout housing (11) and the replaceable horizontal dropout insert (31) can be engaged with each other; and
at least two fasteners, which can fix the replaceable vertical dropout inserts (21) or the replaceable horizontal dropout inserts (31) to the dropout housings (11) respectively.

2. The dropout system (1) of Claim 1, wherein the close end (113) of the arranged recess (111) of the dropout housing (11) has a first edge (1131) and a second edge (1132) so as to form a substantially V-shaped profile.

3. The dropout system (1) of Claim 1, wherein the indent (115) of the arranged recess (111) of the dropout housing (11) has a first edge (1151) and a second edge (1152) so as to form a substantially V-shaped profile.

4. The dropout system (1) of Claim 2, wherein the replaceable vertical dropout insert (21) has a first vertical dropout side (211) and a second vertical dropout side (219), and the first vertical dropout side (211) will abut against the first edge (1131) of the close end (113) when the dropout housing (11) and the replaceable vertical dropout insert (21) are combined with each other.

5. The dropout system (1) of Claim 2, wherein the replaceable horizontal dropout insert (31) has a first horizontal dropout side (311) and a second horizontal dropout side (319), and the first vertical dropout side (311) will abut against the first edge (1131) of the close end (113) when the dropout housing (11) and the replaceable horizontal dropout insert (31) are combined with each other.

6. The dropout system (1) of Claim 3, wherein the vertical dropout protrusion (215) of the replaceable vertical dropout insert (21) has a first vertical dropout edge (2151), and the first vertical dropout edge (2151) of the vertical dropout protrusion (215) of the replaceable vertical dropout insert (21) will abut against the first edge (1151) of the indent (115) of the dropout housing (11) when the dropout housing (11) and the replaceable vertical dropout insert (21) are combined with each other.

7. The dropout system (1) of Claim 3, wherein the horizontal dropout protrusion (315) of the replaceable horizontal dropout insert (31) has a first horizontal dropout edge (3151), and the first horizontal dropout edge (3151) of the horizontal dropout protrusion (315) of the replaceable horizontal dropout insert (31) will abut against the second edge (1152) of the indent (115) of the drop housing (11) when the dropout housing (11) and the replaceable horizontal dropout insert (31) are combined with each other.

8. The dropout system (1) of Claim 1, wherein one of the replaceable vertical dropout inserts (21) has a hanging portion (218) for hanging a rear derailleur.

9. The dropout system (1) of Claim 1, wherein each of the dropout housings (11) has a through hole (117) and each of the replaceable vertical dropout inserts (21, 22) has a vertical dropout through hole (217) corresponding to the through hole (117) of the dropout housing (11), and wherein the fastener is a bolt assembly (41, 42) which will be arranged through the through hole (117) of the dropout housing (11) and the vertical dropout through hole (217) of the replaceable vertical dropout insert (21) when the dropout housing (11) and the replaceable vertical dropout insert (21) are combined with each other.

10. The dropout system (1) of Claim 1, wherein each of the dropout housings (11) has a through hole (117) and each of the replaceable horizontal dropout inserts (31) has a horizontal dropout through hole (317) corresponding to the through hole (117) of the dropout housing (11), and wherein the fastener is a bolt assembly (41, 42) which will be arranged through the through hole (117) of the dropout housing (11) and the horizontal dropout through hole (317) of the replaceable horizontal dropout insert (31) when the dropout housing (11) and the replaceable horizontal dropout insert (31) are combined with each other.

11. The dropout system (1) of Claim 1, wherein each of the replaceable horizontal dropout inserts (31) has an adjusting screw (71) for abutting against the axis of the bicycle wheel when the axle is received in the substantially horizontal slot (313).

12. The dropout system (1) of Claim 1 , wherein the dropout housings (11) are formed as a part of a rear frame assembly (9) of a bicycle.

13. A bicycle comprising a dropout system (1) of Claim 1 , wherein the dropout housings (11) are integrated with a rear frame assembly (9) of the bicycle.
